(19)

Europäisches
Patentamt
European
Patent Office
Office européen
des brevets

(11) **EP 2 793 102 A2**

(12) **EUROPEAN PATENT APPLICATION**

(43) Date of publication:
**22.10.2014 Bulletin 2014/43**

(51) Int Cl.:
***G06F 3/01*** *(2006.01)* ***G06F 3/041*** *(2006.01)*
***G06F 3/048*** *(2013.01)*

(21) Application number: **13198587.1**

(22) Date of filing: **19.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.03.2013 JP 2013055019**

(71) Applicant: **FUJITSU LIMITED**
**Kawasaki-shi,**
**Kanagawa 211-8588 (JP)**

(72) Inventors:
• **Minagawa, Akihiro**
  **Kawasaki-shi, Kanagawa 211-8588 (JP)**

• **Katsuyama, Yutaka**
  **Kawasaki-shi, Kanagawa 211-8588 (JP)**
• **Takebe, Hiroaki**
  **Kawasaki-shi, Kanagawa 211-8588 (JP)**
• **Hotta, Yoshinobu**
  **Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **Information processing device**

(57)    An information processing device includes a processor that executes a procedure. The procedure includes: (a) acquiring concentration level information relating to a degree of concentration of a user on the device; (b) acquiring action information that directly or indirectly represents an action of the user; (c) setting a first threshold that is for determining, in accordance with the concentration level information acquired in (a), whether or not the action information acquired in (b) is an operational instruction; and (d) determining, using the first threshold set in (c), whether or not the action of the user represented by the action information acquired in (b) is intended as an operational instruction by the user.

FIG. 1

EP 2 793 102 A2

**Description**

The embodiments discussed herein are related to an information processing device.

A technology has been proposed in which actions such as gestures, voice messages and the like performed by a user are detected at an information processing device, such as a personal computer (PC), a tablet terminal or the like, as operational instructions for the information processing device. Another technology has been proposed in which, for example, a gesture that a user performs while looking at a camera is detected as being intended as a gesture by the user, while a gesture that is performed by the user while facing in a direction other than at the camera is determined not to be intended as a gesture by the user.

[Related Patent Documents]

Japanese Patent Application Laid-Open (JP-A) No. H11-249773

To prevent small movements and the like by a person being misrecognized as operational instructions, movements that do not exceed a certain threshold are not determined to be operational instructions. However, movements that are intended as operational instructions may not come into the scope of this threshold and not be recognized as operational instructions.

In one regard, an aim of the present invention is for an action intended as an operational instruction by a user to be determined to be an operational instruction even when the user is concentrating.

According to an aspect of the embodiments, an information processing device includes: a processor; and a memory storing instructions, which when executed by the processor perform a procedure, the procedure including: (a) acquiring concentration level information relating to a degree of concentration of a user on the device; (b) acquiring action information that directly or indirectly represents an action of the user; (c) setting a first threshold that is for determining, in accordance with the concentration level information acquired in (a), whether or not the action information acquired in (b) is an operational instruction; and (d) determining, using the first threshold set in (c), whether or not the action of the user represented by the action information acquired in (b) is intended as an operational instruction by the user.

The invention will now be described, by way of example only, with reference to the accompanying drawings, in which:

Fig. 1 is a functional block diagram of an information processing device in accordance with a first exemplary embodiment;

Fig. 2 is a schematic block diagram of a computer that functions as the information processing device;

Fig. 3 is a flowchart illustrating instruction recognition processing in accordance with the first exemplary embodiment;

Fig. 4 is an explanatory diagram for describing the calculation of a threshold from sightline position information;

Fig. 5A is a graph illustrating an example of estimation of a sightline position;

Fig. 5B is a graph illustrating an example of a gesture by a user (derivatives of movement amounts) and estimation of a threshold that is continuously altered;

Fig. 6 is a graph illustrating respective examples of a gesture by a user (derivatives of movement amounts) and estimation of a threshold that is altered in steps;

Fig. 7 is a flowchart illustrating instruction recognition processing in accordance with a second exemplary embodiment;

Fig. 8 is a graph illustrating an example of a gesture by a user (derivatives of movement amounts), estimation of a threshold that is continuously altered, and an action detection interval:

Fig. 9 is a flowchart illustrating instruction recognition processing in accordance with a third exemplary embodiment;

Fig. 10A is a conceptual view illustrating a case in which a sightline position track is contained in an active window;

Fig. 10B is a conceptual view illustrating a case in which a sightline position track is not contained in an active window;

Fig. 11 is a functional block diagram of an information processing device in accordance with a fourth exemplary embodiment;

Figure 12 is a flowchart illustrating instruction recognition processing in accordance with the fourth exemplary embodiment;

Fig. 13A is a graph illustrating an example of a gesture by a user (derivatives of movement amounts) and estimation of a threshold, when a hand is distant; and

Fig. 13B is a graph illustrating an example of a gesture by a user (derivatives of movement amounts) and estimation of a threshold, when a hand is near.

The inventors have discovered that the sizes of actions performed as operational instructions (for example, the size of a gesture, the volume of a voice giving a voice message or the like) tend to be smaller when a user is concentrating on the operation than when the user is not concentrating on the operation. Errors in determinations of whether actions are operational instructions or not may be reduced by, in accordance with a level of concentration by a person, altering a threshold for determining whether the size of an action indicates an operational instruction. Herebelow, examples of embodiments of the disclosed technology are described in detail, referring to the attached drawings.

- First Exemplary Embodiment -

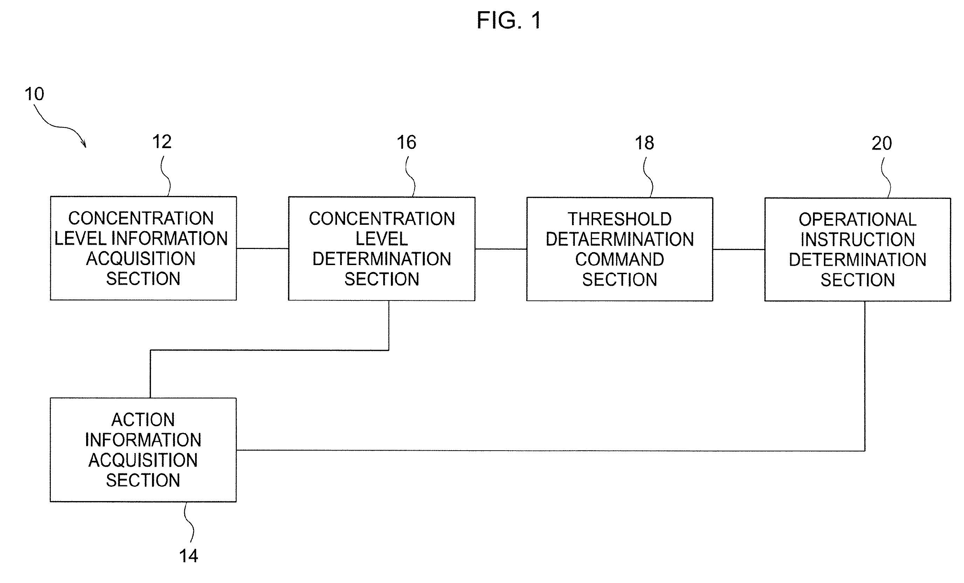

Fig. 1 illustrates an information processing device 10 in accordance with the first exemplary embodiment. The information processing device 10 recognizes operational instructions that a user carries out by performing predetermined actions (for example, actions of performing predetermined gestures with the hands, voice actions of uttering predetermined voice messages, or the like), and carries out processing in accordance with the recognized operational instructions. The information processing device 10 is equipped with a concentration level information acquisition section 12, an action information acquisition section 14, a concentration level determination section 16, a threshold determination command section 18 and an operational instruction determination section 20.

The concentration level information acquisition section 12 acquires concentration level information representing a physical quantity that is related to whether or not a user is concentrating. A position of a line of sight of the user may be mentioned as an example of a physical quantity related to whether the user is concentrating. In this case, the concentration level information acquisition section 12 acquires sightline position information representing a sightline position of the user to serve as the concentration level information. Body movements of the user (for example, movements of the head of the user) may be mentioned as another example of the physical quantity related to whether the user is concentrating. In this case, the concentration level information acquisition section 12 acquires body movement information representing body movements of the user to serve as the concentration level information. The sightline position information, body movement information or the like may be obtained by acquiring a video image, which is obtained by imaging the user with an imaging unit equipped with a function for capturing video images, and analyzing the acquired video image. Hereinafter, a mode in which sightline position information is acquired to serve as the concentration level information is principally described.

The action information acquisition section 14 acquires action information that represents, directly or indirectly, actions by a user that are performed to give operational instructions. For example, when an operational instruction is performed by the user moving their hand(s) and performing a predetermined gesture, the action information acquisition section 14 acquires the video image obtained by imaging of the user by the imaging section to serve as action information that directly represents the action by the user. The action information acquisition section 14 may acquire, instead of the video image, results extracted by image recognition of the hand of the user in the video image. As a further example, when an operational instruction is performed by a user performing a voice action of uttering a predetermined voice message, the action information acquisition section 14 acquires voice information, which is obtained by the voice message being detected by a voice detection unit, to serve as action information that directly represents the action by the user. The action information acquisition section 14 may acquire, instead of the voice information, results of voice recognition of the voice information. Hereinafter, a mode in which an operational instruction is performed by a user moving their hand to perform a predetermined gesture is principally described.

On the basis of the concentration level information acquired by the concentration level information acquisition section 12, the concentration level determination section 16 determines whether or not the user is concentrating.

As described above, when a person is concentrating on giving an operational instruction to an information processing device, the size of the action performed as the operational instruction (for example, the scale of a gesture or the volume of the voice giving a voice message) tends to be smaller. Accordingly, the threshold determination command section 18 acquires a determination result from the concentration level determination section 16 and, depending on whether it is determined by the concentration level determination section 16 that the user is in a concentrating state or not, the threshold determination command section 18 determines a first threshold that is for determining whether actions performed by the user are intended as operational instructions or not. The operational instruction determination section 20 uses the first threshold determined by the threshold determination command section 18 to determine whether or not the action by the user represented by the action information acquired by the action information acquisition section 14 is intended as an operational instruction by the user.

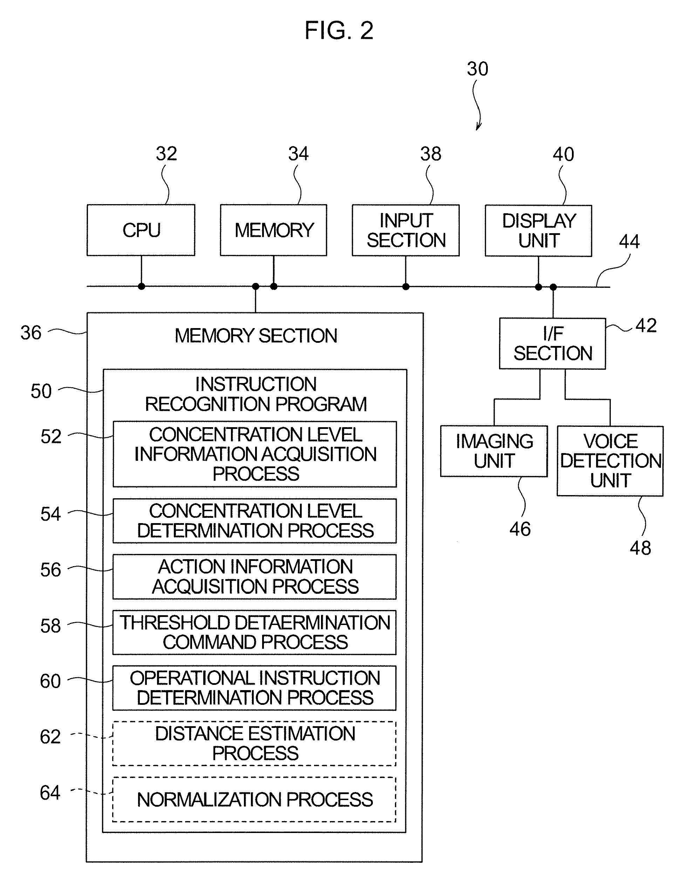

The information processing device 10 may be realized by, for example, a computer 30 illustrated in Fig. 2. The computer 30 is equipped with a CPU 32, a memory 34, an input section 38, a display unit 40 and an interface (I/F) section 42. The CPU 32, the memory 34, a memory section 36, the input section 38, the display unit 40 and the I/F section 42 are connected to one another via a bus 44. An imaging unit 46, which images users, and a voice detection unit 48, which detects voice messages uttered by users, are connected to the I/F section 42.

The memory section 36 may be realized by a hard disk drive (HDD), flash memory or the like. An instruction recognition program 50 for causing the computer 30 to function as the information processing device 10 is memorized in the memory section 36. The CPU 32 reads the instruction recognition program 50 from the memory section 36 and loads the instruction recognition program 50 into the memory 34, and processes included in the instruction recognition program 50 are executed in sequence.

The instruction recognition program 50 includes a concentration level information acquisition process 52, a concentration level determination process 54, an action information acquisition process 56, a threshold determination command process 58 and an operational instruction determination process 60. By executing the concentration level information acquisition process 52, the CPU 32 operates as the concentration level information acquisition section 12 illustrated in Fig. 1. By executing the concentration level determination process 54, the CPU 32 operates as the concentration level determination section 16 illustrated in Fig. 1. By executing the action information acquisition process 56, the CPU 32 operates as the action information acquisition section 14 illustrated in Fig. 1. By executing the threshold determination command process 58, the CPU 32 operates as the threshold determination command section 18 illustrated in Fig. 1. By executing the operational instruction determination process 60, the CPU 32 operates as the operational instruction determination section 20 illustrated in Fig. 1.

Thus, the computer 30 executing the instruction recognition program 50 functions as the information processing device 10. The instruction recognition program 50 is an example of an information processing program of the disclosed technology. The computer 30 may be a personal computer (PC) or a smart terminal that is a portable information processing device incorporating the functions of a portable information terminal (a personal digital assistant (PDA)), or the like.

The information processing device 10 may be realized by, for example, a semiconductor integrated circuit, and more specifically by an application-specific integrated circuit (ASIC) or the like.

When a user is giving operational instructions by performing predetermined gestures with their hands or uttering predetermined voice messages, there may be hand movements or voice utterances that are not intended to be operational instructions or of which the user is unaware. Therefore, in order to prevent mistaken recognition of unintentional hand movements or voice utterances as operational instructions, it is common for large movements and slight movements outside a pre-specified range, or voice utterances with volumes below a predetermined value, to not be recognized as operational instructions.

However, as mentioned above, it is observed that the size of gestures performed as operational instructions or the volume of voice messages uttered as operational instructions tends to be smaller when a person is concentrating on giving operational instructions to an information processing device. As a result, when the user is concentrating on the input of operational instructions to the information processing device, determinations may be made that gestures performed by the user are not intended as gestures by the user.

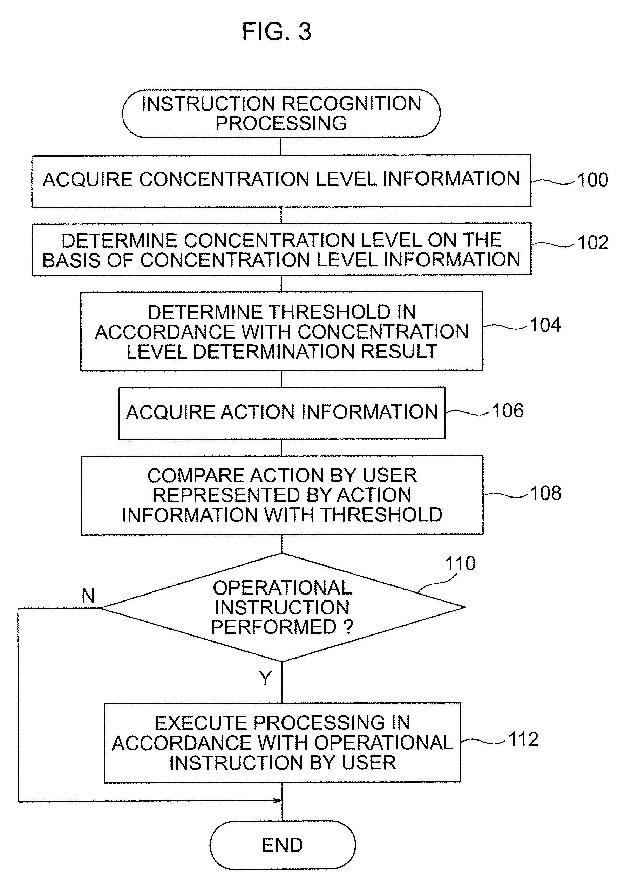

In consideration of the above, the information processing device 10 according to the first exemplary embodiment carries out the instruction recognition processing illustrated in Fig. 3. In step 100 of the instruction recognition processing, the concentration level information acquisition section 12 acquires sightline position information to serve as concentration level information. That is, the concentration level information acquisition section 12 acquires a video image that is obtained by imaging of the user by the imaging unit 46 and identifies sightline positions of the user by analyzing the acquired video image, thus acquiring the sightline position information. For the identification of a sightline position, for example, the technology recited in Japanese Patent Application Laid-Open (JP-A) No. 2004-21870 may be employed.

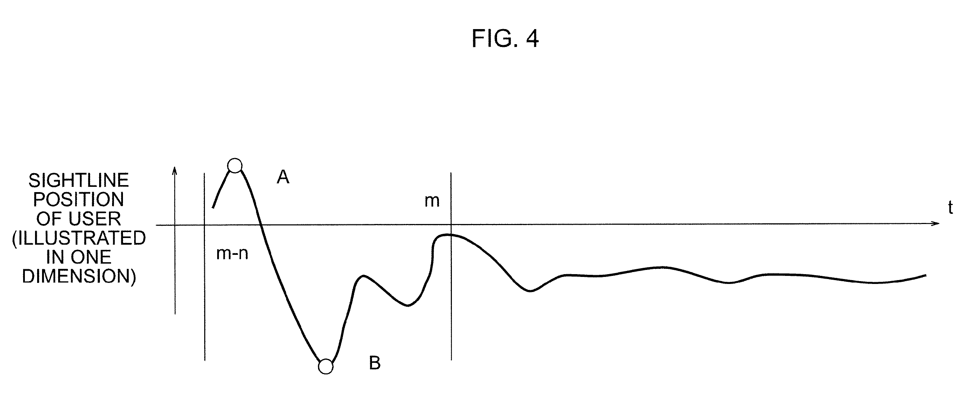

Then, in step 102, on the basis of the concentration level information acquired by the concentration level information acquisition section 12, the concentration level determination section 16 determines a concentration level F, which represents a degree to which the user is concentrating. If the sightline position is shifting as illustrated in Fig. 4, a current point in time is represented by m and the timing of a previous frame of the video image is represented by n, the concentration level F may be found by substituting a difference between a maximum value A and a minimum value B of the sightline position in the period from time n to time m into function f (see expression (1)).

$$F = f(A-B) \qquad (1)$$

Here, function f may be a function that outputs the reciprocal of the input value as illustrated in the following expression (2), and may be an exponential function as illustrated in the following expression (3). Function f may be a function whose output value decreases as the input value increases, and may be a function that, using a table, alters the output value so as to decrease in discrete amounts in response to increases in the input value (A-B).

$$F = f(A-B) = 1/(A-B) \qquad (2)$$

$$F = f(A-B) = a \cdot exp(-(A-B)^2) \qquad\qquad (3)$$

In step 104, in accordance with the concentration level F determined by the concentration level determination section 16, the threshold determination command section 18 specifies an determination in a threshold value TH for the action information that directly or indirectly represents actions by the user. The threshold value TH is an example of the first threshold of the disclosed technology. For example, as illustrated in the following expression (4), the threshold value TH may be the reciprocal of the concentration level F.

$$TH = 1/F \qquad\qquad (4)$$

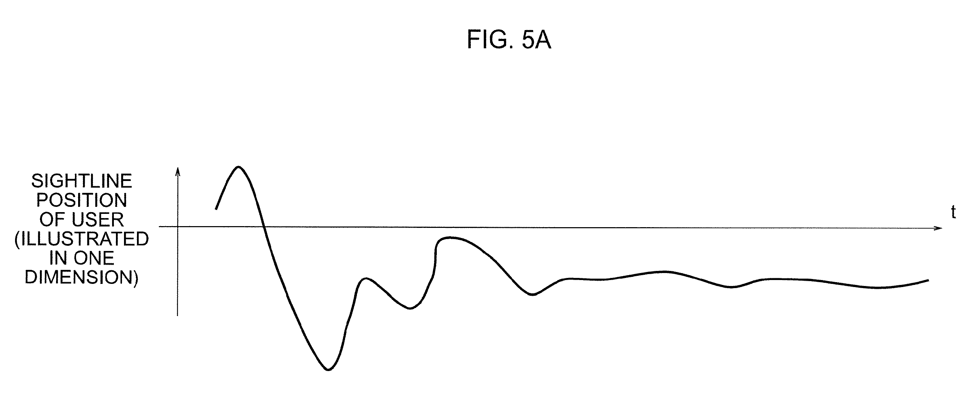

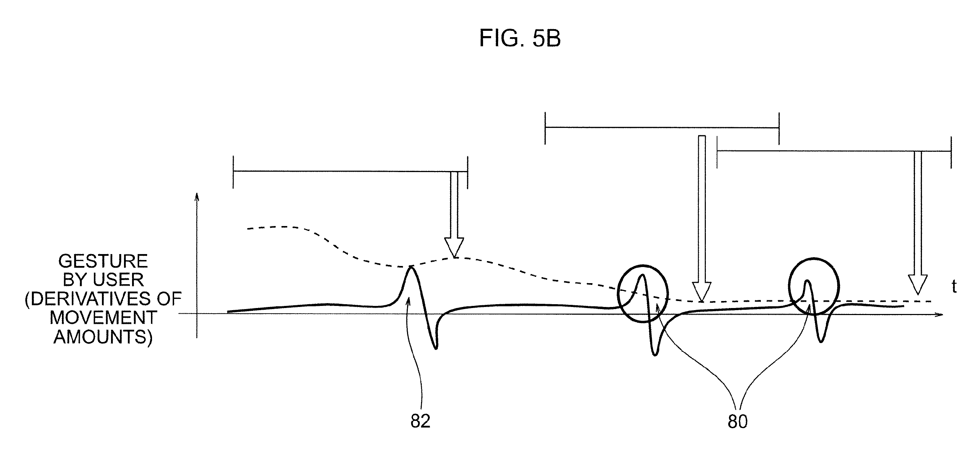

Thus, when the sightline position of the user shifts, for example, as illustrated in Fig. 5A, the threshold value TH presents changes in which the value becomes smaller as variations in the sightline position of the user become smaller, as indicated by the broken line in Fig. 5B. The threshold values TH indicated by the broken line in Fig. 5B represent thresholds for operational instruction determinations calculated from changes in the sightline position within certain periods.

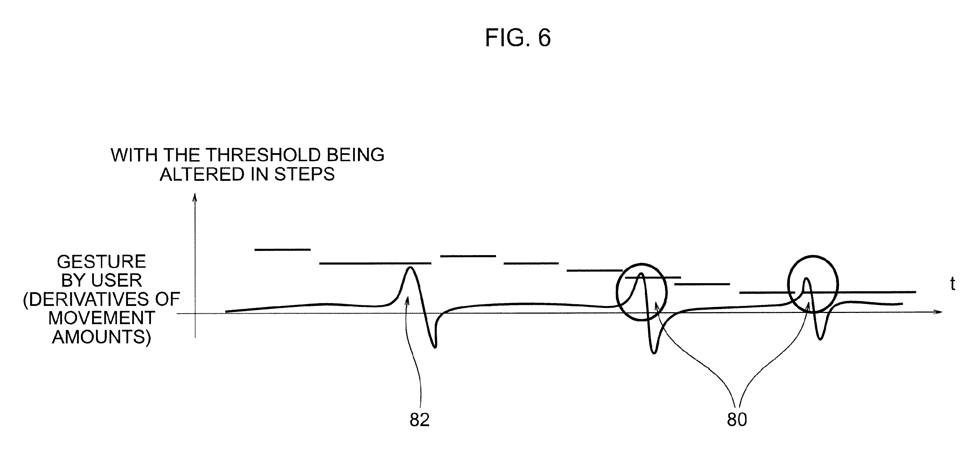

Fig. 5B is a case in which a continuous function is employed as the function f. In the case of a function f in which the output value decreases in discrete amounts in response to the input value (A-B), in response to shifts in the sightline position of the user as illustrated in Fig. 5A, the threshold value TH is altered in discrete amounts as illustrated in Fig. 6. In the case of Fig. 6 too, the threshold value TH presents changes in which the value becomes smaller as variations in the sightline position of the user become smaller.

In step 106, the action information acquisition section 14 acquires the video image obtained by imaging of the user by the imaging unit 46, to serve as action information directly representing an action by the user. By analyzing the acquired video image, the action information acquisition section 14 recognizes a gesture performed by the user moving their hand. For this gesture recognition, for example, the technology recited in JP-A No. 2011-76255 may be employed.

In step 108, the operational instruction determination section 20 compares a size of the action (gesture) by the user represented by the action information acquired by the action information acquisition section 14 with the threshold value TH for which determinations have been specified by the threshold determination command section 18. Then, in step 110, the operational instruction determination section 20 makes a determination as to whether an operational instruction has been performed by the user on the basis of the result of the comparison between the size of the action (gesture) by the user and the threshold value TH.

For example, in a period in which variations in the sightline position of the user are relatively large, the threshold value TH has a relatively large value. Therefore, as indicated by reference numeral 82 in Fig. 5B and Fig. 6, this is a state in which even a large movement does not reach the threshold found from the sightline positions. Thus, even when the user unintentionally carries out a hand movement, misrecognition of this movement as giving an operational instruction is avoided. As another example, in a period in which variations in the sightline position of the user are relatively small, the threshold value TH has a relatively small value. Therefore, as indicated by the reference numeral 80 in Fig. 5B and Fig. 6, this is a state in which even a small movement reaches the threshold found from the sightline positions. Thus, even relatively small movements that are intended as operational instructions may be recognized as giving operational instructions.

If the result of the determination in step 110 is negative, the instruction recognition processing ends. On the other hand, if the result of the determination in step 110 is affirmative, the processing advances to step 112. In step 112, the operational instruction determination section 20 executes processing in accordance with the operational instruction from the user. This processing in accordance with the operational instruction by the user may be, for example, processing to open an arbitrary file, link or the like, processing to close an arbitrary file, link or the like that has been opened, processing to move the position of a cursor, and so forth.

Thus, a user may give operational instructions to the information processing device 10 by moving their hand(s) and performing gestures. Moreover, even when the sizes of actions (gestures) by the user are small because the user is concentrating thereon, actions (gestures) that are intended as operational instructions by the user may be recognized as operational instructions.

- Second Exemplary Embodiment -

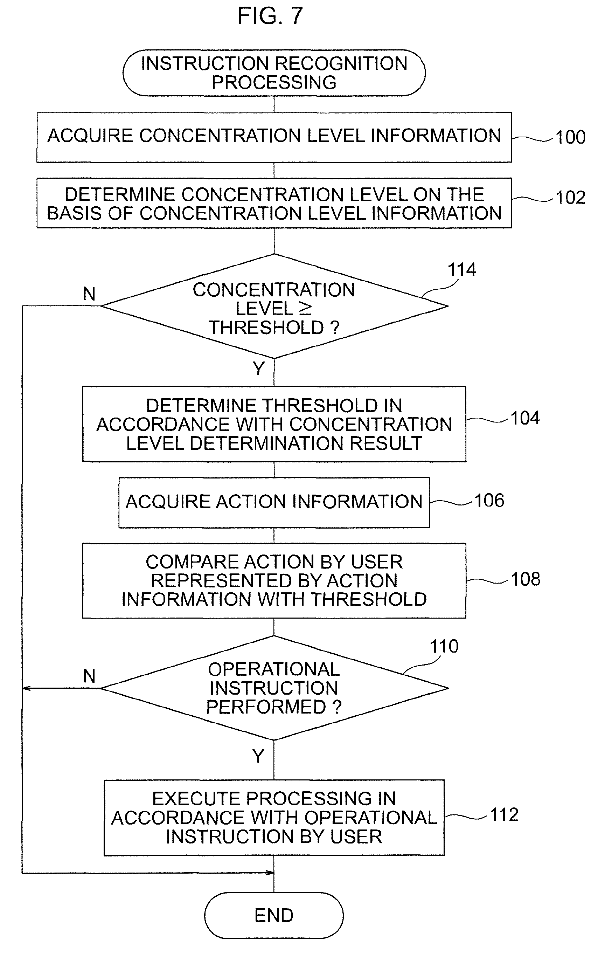

Next, a second exemplary embodiment of the disclosed technology is described. Structures of the second exemplary embodiment are the same as in the first exemplary embodiment, so the same reference numerals are assigned to the respective sections and descriptions of the structures are not given. Herebelow, operation of the second exemplary embodiment is described with reference to Fig. 7.

In the instruction recognition processing according to the second exemplary embodiment, after the concentration level determination section 16 determines the concentration level F in step 102, the processing advances to step 114. In step 114, the concentration level determination section 16 compares the concentration level F with a threshold value THF relating to a pre-specified concentration level, and makes a determination as to whether the concentration level F is at least the threshold value THF. When the concentration level F is equal to or greater than the threshold value THF, the result of the determination in step 114 is affirmative, and the processing from step 104 is carried out (specifying a determination in the threshold value TH with the threshold determination command section 18, acquiring action information with the action information acquisition section 14, and performing an operational instruction determination with the operational instruction determination section 20).

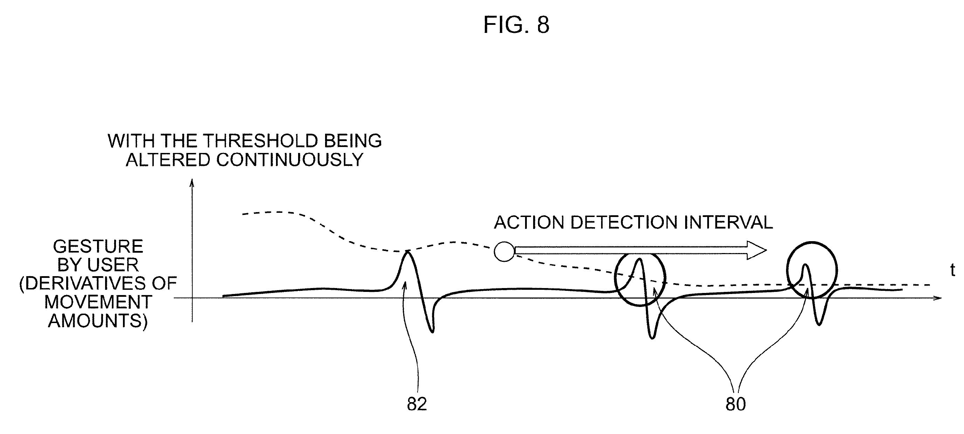

On the other hand, when the concentration level F is less than the threshold value THF, the result of the determination in step 114 is negative, and the instruction recognition processing ends. In this case, the processing from step 104 onward (specifying a determination in the threshold value TH with the threshold determination command section 18, acquiring action information with the action information acquisition section 14, and performing an operational instruction determination with the operational instruction determination section 20) is omitted. Thus, in a period prior to an action detection interval depicted in Fig. 8, processing such as the acquisition of action information and the like is suspended due to the concentration level F being less than the threshold value THF. In the action detection interval depicted in Fig. 8, processing such as the acquisition of action information and the like is started due to the concentration level F being equal to or greater than the threshold value THF. The broken line depicted in Fig. 8 represents the continuously changing threshold of operational instruction determination, the reference numeral 82 indicates a state in which even a large movement does not reach the threshold found from the sightline positions, and the reference numeral 80 indicates a state in which even a small movement exceeds the threshold found from the sightline positions.

Thus, in this second exemplary embodiment, similarly to the first exemplary embodiment, when a user is concentrating and the size of actions (gestures) by the user is small, actions (gestures) that are intended as operational instructions by the user may be recognized as operational instructions. Moreover, in the second exemplary embodiment, action information is not acquired and operational instruction determinations are not performed in a period in which the concentration level F is less than the threshold value THF. Therefore, even if the user moves their hand greatly in a state in which the user is not concentrating, misrecognition of these actions as operational instructions may be avoided. Furthermore, because the acquisition of action information is suspended when the user is not concentrating and is not expected to be giving operational instructions, a processing load on the computer may be moderated.

- Third Exemplary Embodiment -

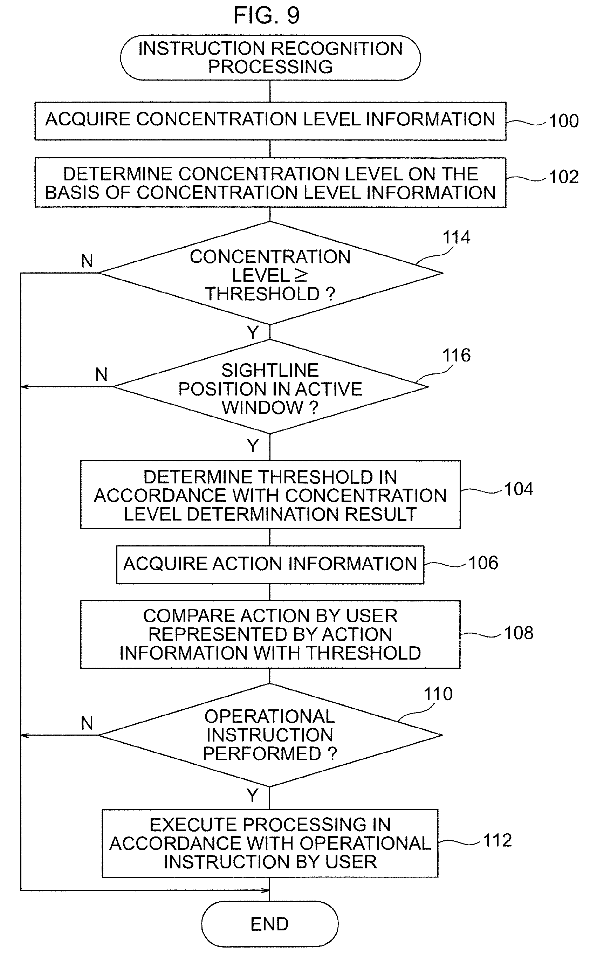

Next, a third exemplary embodiment of the disclosed technology is described. Structures of the third exemplary embodiment are the same as in the first exemplary embodiment, so the same reference numerals are assigned to the respective sections and descriptions of the structures are not given. Herebelow, operation of the third exemplary embodiment is described with reference to Fig. 9.

In the instruction recognition processing according to the third exemplary embodiment, the same as in the second exemplary embodiment, the concentration level F is determined by the concentration level determination section 16 in step 102, and then a determination is made by the concentration level determination section 16 in step 114 as to whether the concentration level F is at least the threshold value THF. When the concentration level F is equal to or greater than the threshold value THF, the result of the determination in step 114 is affirmative and the processing advances to step 116.

In step 116, the concentration level determination section 16 makes a determination as to whether a sightline position represented by the sightline position information acquired by the concentration level information acquisition section 12 is disposed inside an active window of windows displayed at the display unit 40. The determination in step 116 may be implemented by acquiring a display range of the active window displayed at the display unit 40 and determining whether or not the sightline position falls within the display range of the active window.

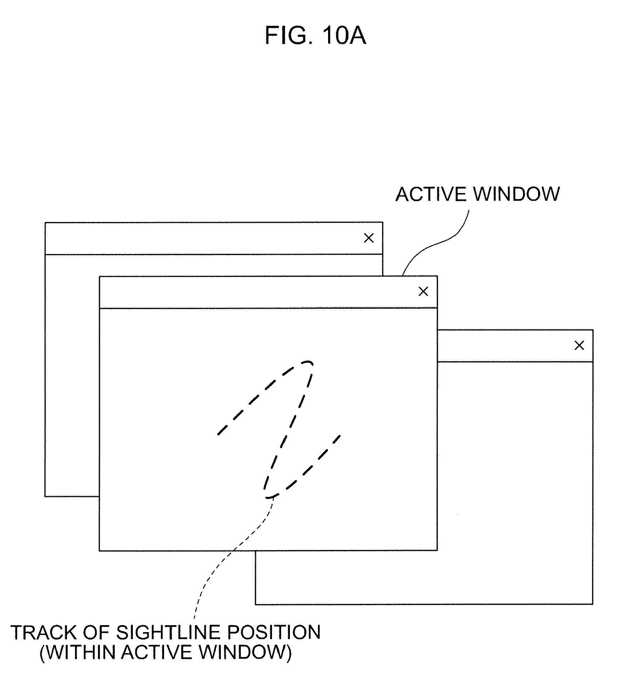

For example, as illustrated in Fig. 10A, when a track of sightline positions of the user is contained within the active window, the user is looking at the interior of the active window, so it may be determined that the user is concentrating thereon. In this case, the result of the determination in step 116 is affirmative, the processing advances to step 104, and the processing from step 104 onward is carried out (specifying a determination in the threshold value TH with the threshold determination command section 18, acquiring action information with the action information acquisition section 14, and performing an operational instruction determination with the operational instruction determination section 20).

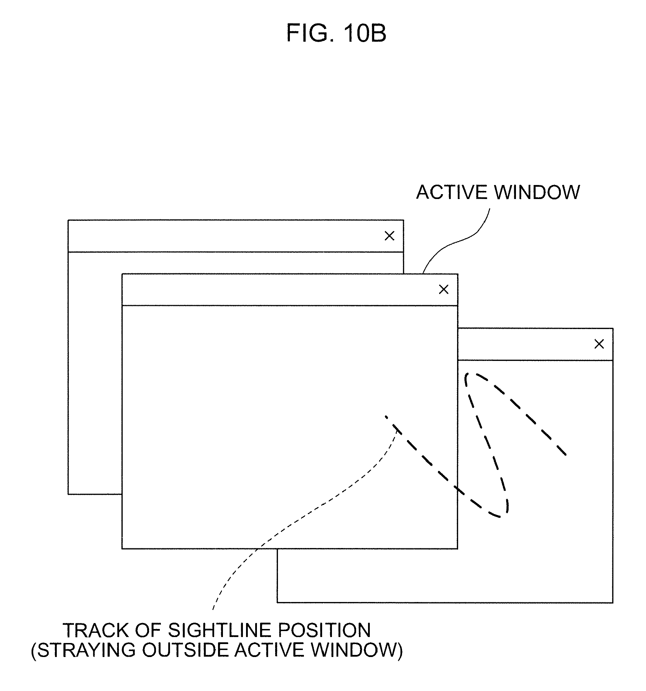

On the other hand, as illustrated by the example in Fig. 10B, when a track of sightline positions of the user strays outside the active window, the user is not looking at the interior of the active window and it may be determined that the user is not concentrating. In this case, the result of the determination in step 116 is negative and the instruction recognition processing ends. Thus, the processing from step 104 onward is omitted.

Thus, in this third exemplary embodiment, whether a user is concentrating may be determined more accurately, by determining whether or not the user is concentrating by making a determination as to whether a sightline position of the user is disposed within an active window. Furthermore, in the third exemplary embodiment too, actions (gestures) that are intended as operational instructions by the user when the user is concentrating may be recognized as operational instructions. Moreover, in the third exemplary embodiment, even if the user unintentionally moves their hand greatly in a state in which the user is not concentrating, misrecognition of these actions as operational instructions may be avoided.

- Fourth Exemplary Embodiment -

Next, a fourth exemplary embodiment of the disclosed technology is described. Parts that are the same as in the first to third exemplary embodiments are assigned the same reference numerals and descriptions thereof are not given.

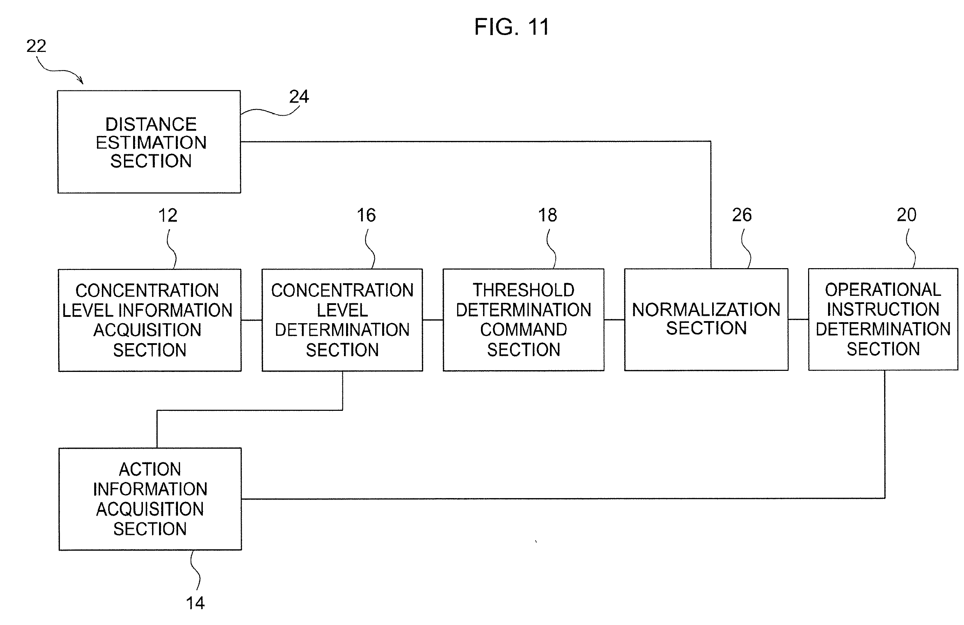

An information processing device 22 according to the fourth exemplary embodiment is illustrated in Fig. 11. The information processing device 22 differs from the information processing device 10 described in the first exemplary embodiment in being provided with a distance estimation section 24 and a normalization section 26.

The distance estimation section 24 estimates a distance of the user on the basis of, for example, the size of an image region that corresponds to the hand of the user in an image obtained by imaging of the user by the imaging unit 46. Instead of the size of an image region corresponding to the hand of the user, the distance of the user may be estimated on the basis of the size of an image region corresponding to the face of the user or the like. As a further example, when the imaging unit 46 has a structure that is provided with a plural number of imaging components, instead of estimating the distance of the user on the basis of the size of an image region, the distance of the user may be estimated on the basis of a difference in positions of an image region in the plural images that are respectively imaged by the plural imaging components. Further yet, instead of the distance of the user being estimated on the basis of an image, the distance of the user may be estimated using, for example, infrared beams or the like.

In accordance with the distance of the user estimated by the distance estimation section 24, the normalization section 26 normalizes the size of actions by the user represented by the action information acquired by the action information acquisition section 14, or normalizes the threshold value TH determined by the threshold determination command section 18. For example, when the user moves their hand and performs a predetermined gesture, the size of a change in position of an image region corresponding to the hand of the user in the video image is smaller when the distance of the user is larger. Therefore, when the normalization section 26 normalizes the size of actions by the user, the normalization section 26 normalizes (corrects) the size of actions by the user such that the size of actions by the user is larger in accordance with larger distances from the user. When the normalization section 26 normalizes the threshold value TH, the normalization section 26 normalizes (corrects) the threshold value TH such that the threshold value TH is larger in accordance with larger distances from the user.

The instruction recognition program 50 according to the fourth exemplary embodiment further includes a distance estimation process 62 and a normalization process 64, as illustrated by broken lines in Fig. 2. By executing the distance estimation process 62, the CPU 32 of the computer 30 according to the fourth exemplary embodiment operates as the distance estimation section 24 illustrated in Fig. 11. By executing the normalization process 64, the CPU 32 of the computer 30 according to the fourth exemplary embodiment operates as the normalization section 26 illustrated in Fig. 11. Thus, the computer 30 executing the instruction recognition program 50 functions as the information processing device 22.

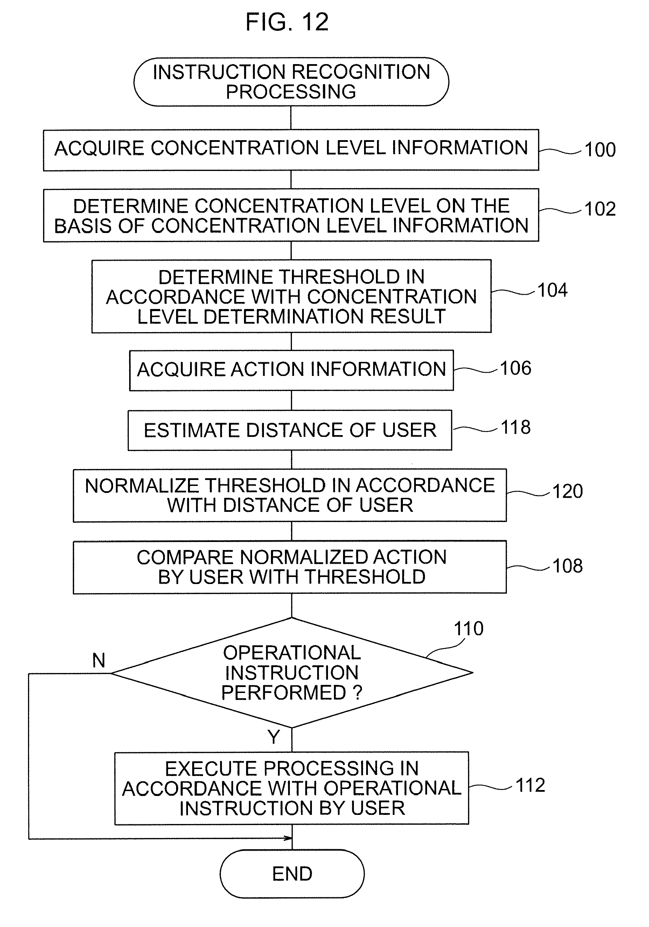

Now, as operations of the fourth exemplary embodiment, portions of the instruction recognition processing according to the fourth exemplary embodiment that differ from the instruction recognition processing described in the first exemplary embodiment (Fig. 3) are described with reference to Fig. 12. In the instruction recognition processing according to the fourth exemplary embodiment, after the action information is acquired by the action information acquisition section 14 in step 106, the processing advances to step 118. In step 118, the distance estimation section 24 estimates a distance of the user on the basis of the size of an image region corresponding to the hand of the user in an image obtained by imaging of the user by the imaging unit 46.

Two methods may be considered for estimating the distance of a user on the basis of the size of an image region corresponding to the hand of the user. In a first method, a plural number of templates that are, for example, hand images with different sizes from one another are registered in advance in association with distances from users corresponding to the sizes of the hands in the individual templates. Hence, a template that is closest to the size of the image region corresponding to the hand of the user is selected from the plural templates by template matching. Then, the distance of a user that is associated with the selected template is extracted to serve as a result of estimation of the distance of the user. Thus, the distance of the user may be estimated from the size of the image region corresponding to the hand of the user.

In the second method, the distance of the user is estimated by evaluating the area of the image region corresponding to the hand of the user in an image obtained by imaging of the user by the imaging unit 46. More specifically, the area (number of pixels) of an image region corresponding to the hand of a user is counted for each of plural cases in which values of the distance of users are different from one another, and the areas (numbers of pixels) of the image regions counted for the respective cases are registered in advance in association with the distances from users. Hence, the image region corresponding to the hand of the user is extracted by extracting a region in an image that is the color of the skin of the user, and the number of pixels in the extracted image region is counted. Then, the area (number of pixels) closest to the counted number of pixels of the image region is selected from the plural registered areas (numbers of pixels), and the distance of a user that is associated with the selected area (number of pixels) is extracted to serve as a result of estimation of the distance of the user. Thus, the distance of the user may be estimated from the size of the image region corresponding to the hand of the user.

In the second method, if a focusing distance of the optical system of the imaging unit 46 is represented by f, an area is represented by $x$ cm$^2$, and the number of pixels in an image region when the hand of a user is imaged is represented by y, then the distance of the user z may be found by calculating the following expression (5).

$$z = f \times \sqrt{(x/y)} \qquad\qquad (5)$$

In step 120, the normalization section 26 normalizes (corrects) the threshold value TH determined by the threshold determination command section 18 in accordance with the distance of the user estimated in step 118. That is, the normalization section 26 normalizes (corrects) the threshold value TH that has been determined by the threshold determination command section 18 such that the threshold value TH is smaller when the distance of the user is larger and the threshold value TH is larger when the distance of the user is smaller. This normalization (correction) may be implemented by, for example, multiplying the threshold value TH with a coefficient whose value decreases as the distance of the user increases. When the processing of step 120 has been performed, the processing advances to step 108 and the processing from step 108 onward is performed.

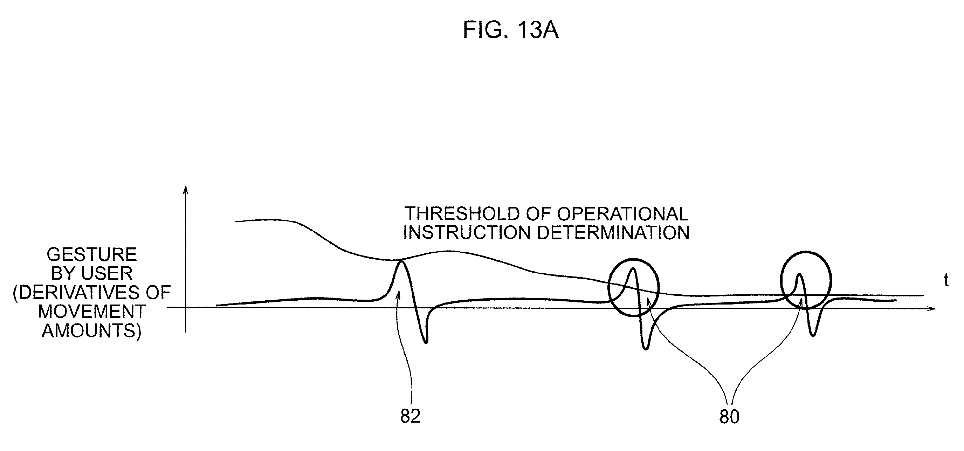

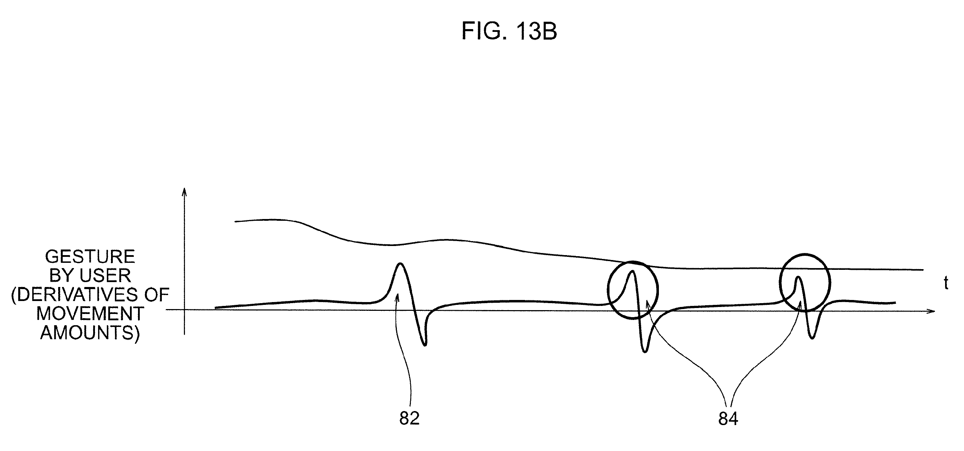

For example, Fig. 13A illustrates an example in which the distance of the user is relatively large (the hand is distant). In the example illustrated in Fig. 13A, when the user is concentrating and the size of an action (gesture) by the user is small, the threshold value TH (indicated with "threshold of operational instruction determination" in Fig. 13A and Fig. 13B) is normalized to be relatively small. Therefore, in the example illustrated in Fig. 13A, when a gesture intended as an operational instruction is performed by the user, even though the distance of the user is relatively large and the size of the action by the user represented by the action information is relatively small, it may be recognized that an operational instruction has been given. The reference numeral 82 depicted in Fig. 13A indicates a state in which even a large movement does not reach the threshold found from the sightline positions, and the reference numeral 80 indicates a state in which even a small movement exceeds the threshold found from the sightline positions.

On the other hand, Fig. 13B illustrates an example in which the distance of the user is relatively small (the hand is near). In the example illustrated in Fig. 13B, when the user is concentrating and the size of an action (gesture) by the user is small, the threshold value TH is normalized to be relatively large compared to the example illustrated in Fig. 13A. In the example illustrated in Fig. 13B, the size of the action by the user as represented by the action information is about the same as in the example illustrated in Fig. 13A. However, because the distance of the user is comparatively small, the actual size of the action by the user is smaller than in the example illustrated in Fig. 13A. Therefore, in the example illustrated in Fig. 13B, when the user moves their hand without intending to give an operational instruction, misrecognition that an operational instruction has been given is avoided. The reference numeral 82 depicted in Fig. 13B indicates a state in which even a large movement does not reach the threshold found from the sightline positions, and the reference numeral 84 indicates a state in which a small movement does not exceed the threshold found from the sightline positions.

Thus, in the fourth exemplary embodiment, the threshold value TH is normalized (corrected) such that the threshold value TH is smaller when the distance of the user is larger and the threshold value TH is larger when the distance of the user is smaller. Therefore, actions intended as operational instructions by the user may be accurately determined to be operational instructions without being affected by changes with the distance of the user in the size of actions by the user represented by the action information.

In the fourth exemplary embodiment, a mode is described in which the threshold value TH is normalized (corrected) in accordance with the distance of the user, but this is not restrictive of the disclosed technology. The normalization section 26 may normalize (correct) the size of the action by the user represented by the action information acquired by the action information acquisition section 14 in accordance with the distance of the user. A criterion for the size of the action by the user represented by the action information may be applied such that the size of the action by the user represented by the action information is larger when the distance of the user is larger and the size of the action by the user represented by the action information is smaller when the distance of the user is smaller. This may be implemented by, for example, multiplying the size of the action by the user represented by the action information with a coefficient whose value increases as the distance of the user increases. In this case too, actions intended as operational instructions by the user may be accurately determined to be operational instructions without being affected by changes with the distance of the user in the size of actions by the user represented by the action information.

Further, a mode has been described hereabove in which determinations in the threshold value TH are specified in accordance with the concentration level F of the user, but this is not restrictive of the disclosed technology. The threshold value TH may be determined in consideration of where the sightline position of the user is disposed. For example, in a state in which an icon is displayed at the display unit 40, when the sightline position of the user stays within the displayed icon, the threshold value TH described hereabove may be used without modification. However, when the sightline position of the user leaves the displayed icon, the concentration level F determined by the concentration level determination section 16 may be multiplied by a coefficient 1/x(x>1), and the threshold value TH may be found on the basis of the concentration level F multiplied by the coefficient 1/x. In this case, it is determined that the concentration level of the user is higher when the user is looking at the icon and that the concentration level of the user is lower when the user is not looking at the icon, and gestures performed as operational instructions by the user are determined accordingly. Therefore, operational instructions may be more accurately determined, taking better account of degrees of concentration by the user.

In the above mode in which it is determined whether the user is looking at an icon, when the sightline position of the user stays within the icon, the threshold value TH may also be set in consideration of the size of this icon. Specifically, if the size of the icon in which the sightline position of the user stays is represented by m, the concentration level F is found by the following expression (6).

$$F = f((A-B)/m) \qquad\qquad (6)$$

The threshold value TH is set on the basis of the concentration level F found from expression (6). In this mode, the value of the concentration level F is higher when the size of the icon at which the user is looking is smaller, and the value of the threshold value TH is smaller when the value of the concentration level F is higher, so actions by the user are more likely to be recognized as operational instructions. Thus, in this mode too, operational instructions may be more accurately determined, taking better account of degrees of concentration by the user.

Hereabove, as an example of the actions of a user, a case of the user performing gestures as operational instructions has been principally described, but this is not restrictive of the disclosed technology. The actions of the user may be, for example, voice actions of uttering predetermined voice messages. In this case, the action information acquisition section 14 acquires voice information representing a voice message given by the user to serve as action information that indirectly represents an action by the user. The operational instruction determination section 20 compares a volume of the voice message according to the voice action by the user, which is indirectly represented by the action information acquired by the action information acquisition section 14, with the threshold value TH, and thus makes a determination as to whether the voice action by the user is intended as an operational instruction by the user.

Hereabove, the sightline position of a user has been described as an example of the physical quantity that is related to whether or not the user is concentrating, but this is not restrictive of the disclosed technology. This physical quantity may be, for example, a body movement of the user. As an example of a body movement, movements of the head of the user may be employed. For example, the technology recited in P. Viola and M. Jones, "Robust real-time face detection", Int. J. of Computer Vision. Vol. 57, no. 2, pp. 137-154, 2004 may be employed. In this case, as an example of the concentration level information, the concentration level information acquisition section 12 acquires body movement information representing movements of the head of the user. The concentration level determination section 16 determines that the user is concentrating when the body movements represented by the body movement information acquired by the concentration level information acquisition section 12 are smaller than a pre-specified threshold.

Hereabove, a mode is described in which the instruction recognition program 50, which is an example of an information processing program relating to the disclosed technology, is pre-memorized (installed) in the memory section 36, but this is not restrictive. The information processing program relating to the disclosed technology may be provided in a form that is recorded on a recording medium such as a CD-ROM, a DVD-ROM or the like.

All references, patent applications and technical specifications cited in the present specification are incorporated by reference into the present specification to the same extent as if the individual references, patent applications and technical specifications were specifically and individually recited as being incorporated by reference.

The disclosed technology has an effect in one regard in that an action intended as an operational instruction by a user may be determined to be an operational instruction even when the user is concentrating thereon.

**Claims**

1. An information processing device (10) comprising:

   a concentration level information acquisition section (12) that acquires concentration level information relating to a degree of concentration of a user on the device;

   an action information acquisition section (14) that acquires action information that directly or indirectly represents an action of the user;

   a threshold determination command section (18) that sets a first threshold that is for determining, in accordance with the concentration level information acquired by the concentration level information acquisition section (12), whether or not the action information acquired by the action information acquisition section (14) is an operational instruction; and

   an operational instruction determination section (20) that determines, using the first threshold set by the threshold determination command section (18), whether or not the action of the user represented by the action information acquired by the action information acquisition section (14) is intended as an operational instruction by the user.

2. The information processing device of claim 1, wherein the concentration level information acquisition section (12) acquires sightline position information representing a sightline position of the user to serve as the concentration level information.

3. The information processing device of claim 2, wherein the concentration level information acquisition section (12) raises the degree of concentration of the user on the device represented by the concentration level information when the sightline position represented by the sightline position information is disposed in a particular range.

4. The information processing device of claim 3, wherein the concentration level information acquisition section (12) acquires information representing an active window displayed at a display unit, and

   raises the degree of concentration of the user on the device indicated by the concentration level information when the particular range is the active window.

5. The information processing device of claim 1, wherein the concentration level information acquisition section (12) acquires body movement information representing a body movement of the user to serve as the concentration level information.

6. The information processing device of claim 5, wherein the concentration level information acquisition section (12) acquires body movement information representing a movement of a head of the user to serve as the body movement of the user.

7. The information processing device of claim 1, wherein the action information acquisition section (14) suspends the acquisition of the action information when the concentration level information indicates that the user is not concentrating on the device.

8. The information processing device of claim 1, wherein the threshold determination command section (18) alters the first threshold continuously or in steps or a combination thereof in accordance with the degree of concentration of the user.

9. The information processing device of any one of claims 1 to 8, further comprising:

   a distance estimation section (24) that estimates a distance of the user; and

   a normalization section (26) that normalizes the first threshold or a size of the action of the user represented by the action information in accordance with the distance of the user estimated by the distance estimation section (24).

10. A program for causing a computer to execute a process, the process comprising:

    acquiring concentration level information relating to a degree of concentration of a user on a device;

    acquiring action information that directly or indirectly represents an action of the user;

    setting a first threshold that is for determining, in accordance with the acquired concentration level information, whether or not the acquired action information is an operational instruction; and

determining, using the set first threshold, whether or not the action of the user represented by the acquired action information is intended as an operational instruction by the user.

# FIG. 1

EP 2 793 102 A2

EP 2 793 102 A2

# FIG. 2

30

32 34 38 40

| CPU | MEMORY | INPUT SECTION | DISPLAY UNIT |

44

36 — MEMORY SECTION

42 — I/F SECTION

50 — INSTRUCTION RECOGNITION PROGRAM

52 — CONCENTRATION LEVEL INFORMATION ACQUISITION PROCESS

54 — CONCENTRATION LEVEL DETERMINATION PROCESS

56 — ACTION INFORMATION ACQUISITION PROCESS

58 — THRESHOLD DETAERMINATION COMMAND PROCESS

60 — OPERATIONAL INSTRUCTION DETERMINATION PROCESS

62 — DISTANCE ESTIMATION PROCESS

64 — NORMALIZATION PROCESS

IMAGING UNIT

VOICE DETECTION UNIT

46

48

# FIG. 3

INSTRUCTION RECOGNITION
PROCESSING

ACQUIRE CONCENTRATION LEVEL INFORMATION ——100

DETERMINE CONCENTRATION LEVEL ON THE
BASIS OF CONCENTRATION LEVEL INFORMATION ——102

DETERMINE THRESHOLD IN
ACCORDANCE WITH CONCENTRATION
LEVEL DETERMINATION RESULT ——104

ACQUIRE ACTION INFORMATION ——106

COMPARE ACTION BY USER
REPRESENTED BY ACTION
INFORMATION WITH THRESHOLD ——108

OPERATIONAL
N    INSTRUCTION    110
PERFORMED ?

Y

EXECUTE PROCESSING IN
ACCORDANCE WITH OPERATIONAL
INSTRUCTION BY USER ——112

END

FIG. 4

# FIG. 5A

SIGHTLINE
POSITION
OF USER
(ILLUSTRATED
IN ONE
DIMENSION)

t

EP 2 793 102 A2

FIG. 5B

# FIG. 6

EP 2 793 102 A2

WITH THE THRESHOLD BEING
ALTERED IN STEPS

GESTURE
BY USER
(DERIVATIVES OF
MOVEMENT
AMOUNTS)

t

82

80

# FIG. 7

```
        ┌──────────────────────────────┐
        │  INSTRUCTION RECOGNITION     │
        │  PROCESSING                  │
        └──────────────────────────────┘
                      │
        ┌──────────────────────────────────────┐
        │ ACQUIRE CONCENTRATION LEVEL INFORMATION │──100
        └──────────────────────────────────────┘
                      │
        ┌──────────────────────────────────────┐
        │ DETERMINE CONCENTRATION LEVEL ON THE │──102
        │ BASIS OF CONCENTRATION LEVEL INFORMATION │
        └──────────────────────────────────────┘
                      │
                    114
            CONCENTRATION
       N    LEVEL ≥
            THRESHOLD ?
                      │ Y
        ┌──────────────────────────────────────┐
        │ DETERMINE THRESHOLD IN               │──104
        │ ACCORDANCE WITH CONCENTRATION        │
        │ LEVEL DETERMINATION RESULT           │
        └──────────────────────────────────────┘
                      │
        ┌──────────────────────────────────────┐
        │ ACQUIRE ACTION INFORMATION           │──106
        └──────────────────────────────────────┘
                      │
        ┌──────────────────────────────────────┐
        │ COMPARE ACTION BY USER               │──108
        │ REPRESENTED BY ACTION                │
        │ INFORMATION WITH THRESHOLD           │
        └──────────────────────────────────────┘
                      │
                    110
            OPERATIONAL
       N    INSTRUCTION
            PERFORMED ?
                      │ Y
        ┌──────────────────────────────────────┐
        │ EXECUTE PROCESSING IN                │──112
        │ ACCORDANCE WITH OPERATIONAL          │
        │ INSTRUCTION BY USER                  │
        └──────────────────────────────────────┘
                      │
                 ┌─────────┐
                 │   END   │
                 └─────────┘
```

# FIG. 8

WITH THE THRESHOLD BEING
ALTERED CONTINUOUSLY

ACTION DETECTION INTERVAL

GESTURE
BY USER
(DERIVATIVES OF
MOVEMENT
AMOUNTS)

t

82

80

## FIG. 9

```
          ( INSTRUCTION RECOGNITION )
          (        PROCESSING        )
                     |
    ┌────────────────────────────────────────┐
    │ ACQUIRE CONCENTRATION LEVEL INFORMATION │─── 100
    └────────────────────────────────────────┘
                     |
    ┌────────────────────────────────────────┐
    │ DETERMINE CONCENTRATION LEVEL ON THE    │─── 102
    │ BASIS OF CONCENTRATION LEVEL INFORMATION│
    └────────────────────────────────────────┘
                     |
                    / \                        114
         N        /     \
      ◄──────────   CONCENTRATION
                     LEVEL ≥
                     THRESHOLD ?
                    \     /
                     \ Y /
                     |
                    / \                        116
         N        /     \
      ◄──────────   SIGHTLINE
                     POSITION IN ACTIVE
                     WINDOW ?
                    \     /
                     \ Y /
                     |
    ┌────────────────────────────────────────┐
    │ DETERMINE THRESHOLD IN                  │
    │ ACCORDANCE WITH CONCENTRATION           │─── 104
    │ LEVEL DETERMINATION RESULT              │
    └────────────────────────────────────────┘
                     |
    ┌────────────────────────────────────────┐
    │ ACQUIRE ACTION INFORMATION              │─── 106
    └────────────────────────────────────────┘
                     |
    ┌────────────────────────────────────────┐
    │ COMPARE ACTION BY USER                  │
    │ REPRESENTED BY ACTION                   │─── 108
    │ INFORMATION WITH THRESHOLD              │
    └────────────────────────────────────────┘
                     |
                    / \                        110
         N        /     \
      ◄──────────   OPERATIONAL
                     INSTRUCTION
                     PERFORMED ?
                    \     /
                     \ Y /
                     |
    ┌────────────────────────────────────────┐
    │ EXECUTE PROCESSING IN                   │
    │ ACCORDANCE WITH OPERATIONAL             │─── 112
    │ INSTRUCTION BY USER                     │
    └────────────────────────────────────────┘
                     |
                  ( END )
```

# FIG. 10A

ACTIVE WINDOW

TRACK OF SIGHTLINE POSITION
(WITHIN ACTIVE WINDOW)

FIG. 10B

ACTIVE WINDOW

TRACK OF SIGHTLINE POSITION
(STRAYING OUTSIDE ACTIVE WINDOW)

FIG. 11

EP 2 793 102 A2

# FIG. 12

INSTRUCTION RECOGNITION
PROCESSING

ACQUIRE CONCENTRATION LEVEL INFORMATION — 100

DETERMINE CONCENTRATION LEVEL ON THE
BASIS OF CONCENTRATION LEVEL INFORMATION — 102

DETERMINE THRESHOLD IN
ACCORDANCE WITH CONCENTRATION
LEVEL DETERMINATION RESULT — 104

ACQUIRE ACTION INFORMATION — 106

ESTIMATE DISTANCE OF USER — 118

NORMALIZE THRESHOLD IN ACCORDANCE
WITH DISTANCE OF USER — 120

COMPARE NORMALIZED ACTION
BY USER WITH THRESHOLD — 108

OPERATIONAL
INSTRUCTION
PERFORMED ? — 110

N

Y

EXECUTE PROCESSING IN
ACCORDANCE WITH OPERATIONAL
INSTRUCTION BY USER — 112

END

FIG. 13A

GESTURE
BY USER
(DERIVATIVES OF
MOVEMENT
AMOUNTS)

THRESHOLD OF OPERATIONAL
INSTRUCTION DETERMINATION

t

82

80

## FIG. 13B

GESTURE
BY USER
(DERIVATIVES OF
MOVEMENT
AMOUNTS)

t

82

84

**REFERENCES CITED IN THE DESCRIPTION**

**Patent documents cited in the description**

- JP H11249773 A
- JP 2004021870 A

- JP 2011076255 A

**Non-patent literature cited in the description**

- **P. VIOLA ; M. JONES.** Robust real-time face detection. *Int. J. of Computer Vision.*, 2004, vol. 57 (2), 137-154